# EUROPEAN PATENT SPECIFICATION

(11) **EP 0 837 836 B1**
(45) Date of publication and mention of the grant of the patent: **06.05.1999**
(21) Application number: 96924316.1
(22) Date of filing: 27.06.1996
(51) Int. Cl.: C04B 26/06, C08J 3/20, C08K 3/22

(54) **ANTIBACTERIAL ARTIFICIAL MARBLE COMPOSITION**
ANTIBAKTERIELLE KUNSTMARMORZUSAMMENSETZUNG
COMPOSITION DE MARBRE ARTIFICIEL ANTIBACTERIEN

(30) Priority: 29.06.1995 JP 164081/95; 26.06.1996 US 670464
(43) Date of publication of application: 29.04.1998
(73) Proprietor: E.I. DU PONT DE NEMOURS AND COMPANY, Wilmington Delaware 19898 (US)
(72) Inventor: MUKAI, Nobuhiro, Toyama-shi, Toyama 931 (JP); NISHIMOTO, Tetsuya, Toyama-shi, Toyama 931 (JP)
(74) Representative: Jones, Alan John
(86) International application number: US9610991
(87) International publication number: WO9701515

(56) References cited:
- US-A- 3 847 865
- PATENT ABSTRACTS OF JAPAN, vol. 17, no. 367(C-1082); & JP,A,0558698 (ISUZU MOTORS LTD), 09-03-1993

## Description

### BACKGROUND OF THE INVENTION

### 1. Field of the Invention

This invention pertains to a composition to be used for manufacturing an acrylic artificial marble having antibacterial characteristics against methicillin-resistant staphylococcus aureus (MRSA).

### 2. Description of the Related Art

Because artificial marble is furnished with excellent properties such as quality, ease of fabrication, ease of installation, weather resistance, and strength, for example, it is broadly used in many fields such as counter tops, in kitchens, for example; furniture; sanitary use; lining materials; and stationary small articles. Also, from a viewpoint that the artificial marble is clean and neat, it has recently been used in hospitals, homes for the aged, etc.

Artificial marble is generally composed of resin, inorganic filler, catalyst, crosslinking agent, and pigment, and in particular, acrylic group artificial marble has a specific elegant appearance, easy processibility, excellent strength, and in particular, excellent weather resistance.

Recently, along with the diversification of Japanese lifestyles, a consciousness of cleanliness and neatness has been broadened among people, especially among young adults. Also, infections in hospitals and secondary infections are considered to be a problem. Under such a situation, the development of a pure material or a material that does not propagate bacteria has been in demand. On the other hand, because artificial marble is nonporous, bacteria are not easily propagated on it compared with other porous construction materials, and it has become familiar as being a pure material in terms of ease of cleaning.

Also, in a general resin material field, there are several conventional techniques for giving antibacterial, antimycotic, and deodorizing functions to a resin material (Japanese Kokai Patent Application Nos. Hei 5[1993]-295127, Hei 5[1993]-140331, Hei 5[1993]-25319, Hei 2[1990]-124949, Hei 4[1992]-93360).

However, a technique which reviewed a constitution for giving an anti-MRSA effect to a resin material, in particular, among the antibacterial functions was seldom recognized.

### SUMMARY OF RESULTS

This invention considers the above-mentioned conventional technique, and its purpose is to provide an anti-MRSA acrylic composition for manufacturing an artificial marble having an anti-MRSA characteristic.

These inventors reviewed in earnest based on a new noticed point for providing an anti-MRSA artificial marble, and as a result, it was discovered that if alumina tri-hydrate as an inorganic filler of an artificial marble and an antibacterial agent containing zinc oxide were used together, the components exerted an unexpected action and gave favorable anti-MRSA characteristics. Then, this invention was completed.

In other words, this invention provides an acrylic artificial marble composition composed of resin component at 90-10 parts by weight, alumina tri-hydrate at 10-90 parts by weight, and an antibacterial agent containing zinc oxide at 0.1-10.0 parts by weight to the above-mentioned resin component and alumina tri-hydrate at 100 parts by weight in total.

### DETAILED DESCRIPTION OF THE INVENTION

Next, this invention is explained in further detail. The resin component to be used in this invention is not specially limited as long as it can constitute an acrylic group artificial marble by curing, and various kinds of conventional acrylic group monomers, acrylic group partial polymers, vinyl monomers for copolymerization other than acrylic group monomers, or partial polymers, can be used. As the acrylic group monomer, (meth)acrylic ester is preferable. Also, in this specification, "(meth)acrylic" means "acrylic and/or methacrylic."

As the (meth)acrylic ester, for example, methyl (meth)acrylic ester, ethyl (meth)acrylic ester, butyl (meth)acrylic ester, 2-ethylhexyl (meth)acrylic ester, benzyl (meth)acrylic ester, glycidyl (meth)acrylic ester are mentioned. Among them, in particular, methyl (meth)acrylic ester is preferable. As the vinyl monomer for copolymerization, styrene, α-methylstyrene, vinyltoluene, acrylonitrile, and vinyl acetate are mentioned. The amount of vinyl monomer for copolymerization to be used is preferably 10 parts by weight or less per 100 parts by weight of monomer of the resin component to be used.

Furthermore, as an agent for crosslinking the resin component, crosslinking monomers having several polymerizable double bonds in a molecule, such as ethylene glycol di(meth)acrylic ester, diethylene glycol di(meth)acrylic ester, triethylene glycol di(meth)acrylic ester, tetraethylene glycol di(meth)acrylic ester, 1,6-hexanediol di(meth)acrylic ester, trimethylolpropane tri(meth)acrylic ester, polybutylene glycol di(meth)acrylic ester, and neopentyl glycol di(meth)acrylic ester are preferably used together. Among them, in particular, ethylene glycol di(meth)acrylic ester is preferable. The amount of crosslinking vinyl monomer to be used is usually 0.05-20 parts by weight of the total amount of resin plus alumina tri-hydrate.

The resin component is preferably a prepolymerized syrup. In other words, it is preferable to use a substance in a desired viscous state in which an acrylic group partial polymer (which may also include a polymer whose polymerization is completed) is dissolved in an acrylic group monomer solution or a mixed monomer solution containing a vinyl monomer for copolymerization besides an acrylic group monomer as a main component.

Methods for obtaining the syrup are, for example, a method of polymerizing an acrylic group monomer and stopping the progress of the polymerization at a certain moment; a method of dissolving a bead-shaped polymer, in which an acrylic group monomer obtained by a suspension polymerization is a main component unit in an acrylic group monomer. In case a syrup is used, advantages are, for example, 1) when alumina tri-hydrate is added to the resin component, the sedimentation of alumina tri-hydrate can be prevented by controlling the viscosity of the syrup, and 2) the curing time of the resin component can be shortened.

Also, in order to cure the resin component, a curing catalyst is usually used. The curing catalyst is typically present in amounts of 0.1 to 8 parts of the total amount of resin plus alumina tri-hydrate. As the curing catalyst, tert-butylperoxymaleic acid, benzoyl peroxide, cumene hydroperoxide, tert-butylhydroperoxide, dicumyl peroxide, acetyl peroxide, lauroyl peroxide, and azobisisobutyronitrile are mentioned. In case it is polymerized and cured at ambient temperature, for example, a combination of peroxide and amines, a combination of peroxide and sulfinic acids, a combination of peroxide and cobalt compound, a combination of peroxy compound such as tert-butylperoxymaleic acid, mercaptan compound such as glycol dimercaptoacetate, and water (deionized water, etc.), are mentioned.

The alumina tri-hydrate to be used in this invention is an inorganic filler for giving desired appearance, hardness, and elastic modulus to an artificial marble. Also, in this invention, the alumina tri-hydrate is a component that exerts a reinforcing action for the effectiveness of the antibacterial agent containing zinc oxide in giving anti-MRSA characteristics.

The alumina tri-hydrate is used in a range of 10-90 parts by weight to resin component and alumina tri-hydrate at 100 parts by weight in total. The lower limit of the amount to be used is 20 parts by weight or more, preferably 45 parts by weight or more, and more preferably 50 parts by weight or more. The upper limit is preferably 88 parts by weight or less. As the particle diameter of the alumina tri-hydrate, an average particle of 10-100 µm is preferable, considering the influence of the viscosity increase when mixing with the resin component. Also, it is preferable to be surface-treated with a silane group coupling agent such as a methacrylicsilane (γ-methacryloxypropyltrimethoxysilane).

Inorganic fillers other than the alumina tri-hydrate can also be used in a range in which the effect of this invention is not damaged. As the inorganic filler to be used, calcium hydroxide, magnesium hydroxide, powdered talc, powdered quartz, fine silica, diatomaceous earth, gypsum, powdered glass, mineral clay, powdered chalk, marble, limestone, aluminum silicate, calcium silicate, borax, calcium sulfite, calcium sulfate, barium sulfate, silicon dioxide, calcite, foundation stone, titanium oxide, antimony trioxide, clay, aluminum oxide, calcium carbonate, nickel powder, iron powder, zinc powder, copper powder, iron oxide, glass bead, glass fiber, barium salt, glass filler having a lead salt, silica gel, zirconium oxide, and tin oxide are mentioned.

The antibacterial agent to be used in this invention is a component to be dispersed in an artificial marble together with the alumina tri-hydrate for the purpose of giving an anti-MRSA characteristic. The antibacterial agent is not specially limited as long as it includes zinc oxide as an effective component, and various kinds of conventional, known antibacterial agents can be used. Specifically, zinc oxide powder; a mixture of zirconium phosphate and silver oxide/zinc oxide (for example, trade name, Novaron AGZ-330 (hereafter Novaron), made by Toagosei Co., Ltd., Tokyo, Japan); a mixture of zeolite and silver oxide/zinc oxide (for example, trade name, Zeomic, made by Shinanen Zeomic Co. Ltd., Nagoya, Japan); or a mixture of calcium phosphate and zinc oxide (for example, trade name, Apacider made by Sangi Co. Ltd., Tokyo, Japan) can be used. Also, in case the zinc oxide powder is used alone, its average particle diameter is preferably 0.2-100 µm, more preferably 0.2-50 µm, and especially preferably 0.2-10 µm. The amount of antibacterial agent to be used is 0.1-10.0 parts by weight to resin component and alumina tri-hydrate at 100 parts by weight in total. Furthermore, the lower limit of the amount to be used is preferably 0.3 part by weight or more, more preferably 0.5 part by weight or more. The upper limit is preferably 8.0 parts by weight or less.

In this invention, in addition to each above-mentioned component, various kinds of components known as conventional additive components for artificial marble can be used without a limitation. For example, white (titanium oxide, zinc sulfide), yellow (iron oxide yellow), black (iron oxide black), red (iron oxide red), and blue (ultramarine blue, phthalocyanine blue) pigments, dyes, ultraviolet absorbents, flame retardants, parting agents, fluidizing agents, viscosity enhancers, polymerization inhibitors, and antioxidants are mentioned.

The anti-MRSA acrylic artificial marble is obtained by polymerizing and curing the composition of this invention. As the polymerizing methods, there are redox polymerization and a method of adding a thermal initiator to the composition and thermally polymerizing it. The redox polymerization of a polymer in which an acrylic group monomer is a main component unit is carried out by the combination of an acyl peroxide such as benzoyl peroxide and an amine compound such as N,N-dimethylaniline, N,N-diethylaniline, and N,N-dimethyl-p-toluidine, or a combination of a peroxy compound such as tert-butylperoxymaleic acid and a mercaptan compound such as ethylene glycol dimercaptoacetate.

The anti-MRSA acrylic artificial marble with a desired shape is obtained by curing the composition of this invention in a mold. As the molding method, any of cast molding, injection molding, compression molding can be applied; however, cast molding is preferable. Also, it is desirable for the surface of the molded product after curing to be sanded using sandpaper or a sponge-form grinder (e.g., Scotch-Brite®, made by 3M, St. Paul, MN).

Also, for the purpose of providing the surface of the artificial marble in a granite-like pattern having relatively large particles or in a sandstone-like pattern having relatively small particles, an artificial marble with the same quality is ground beforehand into a granular form, mixed with the composition of this invention, and molded, so that an artificial marble with such a pattern can be obtained. In this case, the granular-form substance does not always need to include the antibacterial agent. Even in a case where 10-20 wt% of granular-form substance which contains no antibacterial agent is added, similar favorable anti-MRSA characteristics are obtained.

### EXAMPLES

Next, the application examples of this invention are explained, but not intended to limit the invention. In the following description, "part" and "%" are based on the weight standard which is the total amount of resin, alumina tri-hydrate, catalyst and other additives as 100 parts unless otherwise stated.

### Application Example 1 and Comparative Examples 1

A syrup composed of poly(methyl methacrylic ester) and methyl methacrylic ester (weight ratio = 2:8) was prepared. The viscosity of the syrup at 25°C was 50 cP.

In Application Example 1, 100 parts syrup and alumina tri-hydrate powder with an average particle diameter of 45 µm (made by Nippon Light Metal Co., Ltd., Tokyo, Japan) in total (the ratio of alumina tri-hydrate is described in Table I), 0.3 part tertiary-butylperoxymaleic acid (trade name, Perbutyl MA, made by Nippon Oil and Fats Co., Ltd., Tokyo, Japan), 0.35 part ethylene glycol dimethacrylic ester (trade name, Acryester ED, made by Mitsubishi Rayon Co., Ltd., Tokyo, Japan), 0.15 part ethylene glycol dimercaptoacetate, 0.1 part deionized water, 0.9 part white pigment (titanium oxide), and a prescribed amount (described in Table I) of zinc oxide (made by Sakai Chemical Co., Ltd., Osaka, Japan) with an average particle diameter of 0.55 µm as an antibacterial agent were mixed and degassed under vacuum with stirring. The vacuum-degassed mixture was cast into a mold and cured at room temperature, so that a sheet-form cured product with a thickness of 13 mm was obtained. Its surface was sanded with #120 sandpaper, and an acrylic artificial marble was obtained. The surface roughness was 1.7 µm.

In Comparative Example 1, as described in Table I, similarly to Application Example 1 except for adding either zinc oxide as the antibacterial agent or alumina tri-hydrate powder separately, an acrylic artificial marble was obtained.

As for the acrylic artificial marbles obtained in the above-mentioned Application Example 1 and Comparative Example 1, the anti-MRSA characteristics and the anticoliform bacteria characteristics were tested. The testing methods are as follows.
1) Test Bacteria
   Staphylococcus aureus IID 1677 (MRSA)
   Escherichia coli IFO 3301 (coliform bacteria)
   IID 1677 can be officially obtained from the Laboratory of the Medical Department of Tokyo University, and IFO 3301 can be officially obtained from Fermentation Research Foundation.
2) Preparation Of Bacterial Solution
   A culture solution of test bacteria cultivated under shaking at 35°C for 16-20 hours (h) in an ordinary bouillon medium (made by Eiken Chemical Co., Ltd., Tokyo, Japan) was diluted 10,000 times with a sterilized phosphoric acid buffer solution, and it was used as a bacteria solution.
3) Test Operation
   0.5 mL bacteria solution was dropped on the test surface of a specimen, stored at 25°C in a closed system, and after 6 h and 24 h, the number of live bacteria on the specimen was measured. Also, 0.5 mL bacteria solution was dropped into a sterilized plastic petri dish, and it was used as a comparative specimen. Testing was carried out similarly.
4) Number Of Live Bacteria
   The specimen and the comparative specimen were respectively washed out with 10 mL (soybean-casein digest broth with lecithin and polysorbate) SCDLP medium (made by Nihon Chemical Co., Ltd., Osaka, Japan), and the number of live bacteria was measured by a pour-plate culture method (culture at 35°C for 48 h) using a standard agar medium and calculated per specimen and comparative specimen.

The results are shown in the following Tables I and II.

**TABLE I**

| ANTI-MRSA TEST | | | | | | |
|---|---|---|---|---|---|---|
| | | | | No. of Live Bacteria | | |
| | Specimen No. | Zinc Oxide | Alumina Tri-Hydrate | After the Start | After 6 h | After 24 h |
| Application Example 1 | 1 | 0.5 | 50 | 1.0 x 10⁵ | 3.7 x 10² | 60 |
| | 2 | 0.5 | 58 | 1.0 x 10⁵ | 2.5 x 10² | 60 |
| | 3 | 0.5 | 60 | 1.0 x 10⁵ | 3.0 x 10² | <10 |
| | 4 | 0.5 | 62.7 | 1.0 x 10⁵ | 3.2 x 10² | <10 |
| | 5 | 0.5 | 65.2 | 1.0 x 10⁵ | 2.0 x 10² | <10 |
| | 6 | 0.5 | 68 | 1.0 x 10⁵ | 1.5 x 10² | <10 |
| | 7 | 0.5 | 70.2 | 1.0 x 10⁵ | 1.0 x 10² | <10 |
| | 8 | 1.0 | 62.7 | 1.0 x 10⁵ | 20 | 10 |
| | 9 | 3.0 | 62.7 | 1.0 x 10⁵ | 10 | <10 |
| | 10 | 5.0 | 62.7 | 1.0 x 10⁵ | 20 | <10 |
| Comp. Ex. 1 | 1' | 0 | 62.7 | 1.0 x 10⁵ | 3.9 x 10⁵ | 5.8 x 10⁵ |
| | 2' | 0.5 | 0 | 1.0 x 10⁵ | 3.6 x 10³ | 1.2 x 10³ |
| Comp. Specimen | | | | 1.0 x 10⁵ | 2.2 x 10⁵ | 7.5 x 10⁴ |

**TABLE II**

| ANTICOLIFORM BACTERIA TEST (REFERENTIAL TEST) | | | | | | |
|---|---|---|---|---|---|---|
| | | | | No. of Live Bacteria | | |
| | Specimen No. | Zinc Oxide | Alumina Tri-Hydrate | After the Start | After 6 h | After 24 h |
| Application Example 1 | 8 | 1.0 | 62.7 | 1.0 x 10⁵ | 6.5 x 10⁴ | 1.1 x 10⁴ |
| | 9 | 3.0 | 62.7 | 1.0 x 10⁵ | 4.8 x 10⁴ | 1.5 x 10⁴ |
| | 10 | 5.0 | 62.7 | 1.0 x 10⁵ | 4.4 x 10⁴ | 9.4 x 10³ |

As shown in Table I, in Application Example 1, by using zinc oxide as an antibacterial agent with alumina tri-hydrate powder, an excellent anti-MRSA characteristic is exerted, whereas in Comparative Example 1, in which only one of them is added, a sufficient anti-MRSA characteristic cannot be obtained. Also, the results shown in Table II show that an excellent effect is not exerted particularly in the anticoliform bacteria characteristics even by using both zinc oxide and alumina tri-hydrate. In other words, there are no anticoliform bacteria characteristics, but, there are anti-MRSA characteristics, which contrast shows the specificity of this invention.

### Application Example 2 and Comparative Example 2

Similarly to Application Example 1 and Comparative Example 1 except for using Novaron, an acrylic artificial marble was made, and the anti-MRSA characteristics were tested (after 6 h storage). The results are shown in the followina Table III

**TABLE III**

| ANTI-MRSA TEST | | | | | |
|---|---|---|---|---|---|
| | | | | No. of Live Bacteria | |
| | Specimen No. | Novaron | Alumina Tri-Hydrate | After the Start | After 6 h |
| Application Example 2 | 11 | 0.5 | 20 | 1.0 x 10⁵ | 2.5 x 10² |
| | 12 | 0.5 | 30 | 1.0 x 10⁵ | 3.1 x 10² |
| | 13 | 0.5 | 45 | 1.0 x 10⁵ | 70 |
| | 14 | 0.5 | 50 | 1.0 x 10⁵ | <10 |
| | 15 | 0.5 | 58 | 1.0 x 10⁵ | <10 |
| | 16 | 0.5 | 60 | 1.0 x 10⁵ | <10 |
| | 17 | 0.5 | 62.7 | 1.0 x 10⁵ | <10 |
| | 18 | 0.5 | 65.2 | 1.0 x 10⁵ | <10 |
| | 19 | 0.5 | 68 | 1.0 x 10⁵ | <10 |
| | 20 | 0.5 | 70.2 | 1.0 x 10⁵ | <10 |
| | 21 | 1.2 | 62.7 | 1.0 x 10⁵ | 20 |
| | 22 | 8.0 | 62.7 | 1.0 x 10⁵ | <10 |
| Comp. Ex. 2 | 1' | 0 | 62.7 | 1.0 x 10⁵ | 3.9 x 10⁵ |
| | 3' | 0.5 | 0 | 1.0 x 10⁵ | 1.6 x 10⁵ |

As shown in Table III, in Application Example 2 using Novaron as an antibacterial agent and alumina tri-hydrate powder together, excellent anti-MRSA characteristics are exerted, whereas in Comparative Example 2 in which only one of them is added, sufficient anti-MRSA characteristics cannot be obtained.

### Application Example 3

Similarly to Application Example 1 except for using zinc oxide with different particle diameter and purity made by Sakai Chemical Industry Co., Ltd., Osaka, Japan, that is, (a) an average particle diameter of 0.26-0.28 µm and a purity of 99.5%, (b) an average particle diameter of 0.5-0.6 µm and a purity of 99.5%, and (c) an average particle diameter of 0.5-0.6 µm and a purity of 99.0%, an acrylic artificial marble was made and the anti-MRSA characteristics were tested. The results are shown in the following Table IV.

**TABLE IV**

| ANTI-MRSA TEST | | | | | | |
|---|---|---|---|---|---|---|
| | | | | No. of Live Bacteria | | |
| | Specimen No. | Zinc Oxide | Alumina Tri-Hydrate | After the Start | After 6 h | After 24 h |
| Application Example 3 | 23 | (a) 1.0 | 62.7 | 1.3 x 10⁵ | 10 | <10 |
| | 24 | (b) 1.0 | 62.7 | 1.3 x 10⁵ | <10 | <10 |
| | 25 | (c) 1.0 | 62.7 | 1.3 x 10⁵ | 2.5 x 10² | <10 |

As shown in Table IV, similarly, excellent anti-MRSA characteristics are exerted even with changes in the particle diameter of the zinc oxide.

### Application Example 4

Similarly to Application Example 1 except for not using deionized water as an auxiliary catalyst for curing, an acrylic artificial marble was made, and the anti-MRSA characteristics were tested. The results are shown in the following Table V.

**TABLE V**

| ANTI-MRSA TEST | | | | | | |
|---|---|---|---|---|---|---|
| | | | | No. of Live Bacteria | | |
| | Specimen No. | Antibacterial Agent | Alumina Tri-Hydrate | After the Start | After 6 h | After 24 h |
| Application Example 4 | 26 | Zinc Oxide 0.5 | 62.7 | 1.4 x 10⁵ | 1.7 x 10² | <10 |
| | 27 | Novaron 0.5 | 62.7 | 1.4 x 10⁵ | <10 | |

As shown in Table V, if an antibacterial agent containing zinc oxide and alumina tri-hydrate are used together, excellent anti-MRSA characteristics are exerted, regardless of the presence of the deionized water as an auxiliary catalyst for curing.

### Application Example 5

A prefabricated artificial marble (the same one as that of Application Example 1 except for not containing the antibacterial agent) was ground, so that a granular-form substance of 7-10 mesh was obtained. Similarly to Application Example 2 except for adding 10-20 wt% (described in Table VI) granular-form substance to the total amount of mixture, an acrylic artificial marble was made, and the anti-MRSA characteristics were tested. The results are shown in the following Table VI.

**TABLE VI**

| ANTI-MRSA TEST | | | | | | | |
|---|---|---|---|---|---|---|---|
| | | | | | No. of Live Bacteria | | |
| | Specimen No. | Granular Form (%) | Novaron | Alumina Tri-Hydrate | After the Start | After 6 h | After 24 h |
| Application Example 5 | 28 | 10 | 0.5 | 62.7 | 1.3 x 10⁵ | <10 | <10 |
| | 29 | 15 | 0.5 | 62.7 | 1.3 x 10⁵ | <10 | <10 |
| | 30 | 20 | 0.5 | 62.7 | 1.3 x 10⁵ | <10 | <10 |

As shown in Table VI, even in a case where 10-20 wt% of granular-form substance containing no antibacterial agent is added, similar favorable anti-MRSA characteristics are obtained.

### Comparative Example 3

Similarly to Application Example 1 except for using zinc sulfide instead of zinc oxide, an acrylic artificial marble was made, and the anti-MRSA characteristics and the anticoliform bacteria characteristics were tested. The results are shown in the following Table VII.

**TABLE VII**

| ANTI-MRSA TEST AND ANTICOLIFORM BACTERIA TEST | | | | | | |
|---|---|---|---|---|---|---|
| | | | | No. of Live Bacteria | | |
| | Specimen No. | Zinc Sulfide | Alumina Tri-Hydrate | After the Start | After 6 h | After 24 h |
| | | | | (MRSA) | | |
| Comp. Example 3 | 4' | 3.0 | 62.7 | 1.4 x 10⁵ | 1.7 x 10⁵ | 3.1 x 10⁴ |
| | | | | (Coliform bacteria) | | |
| | | | | 1.4 x 10⁵ | 2.1 x 10⁵ | 1.8 x 10⁶ |

As shown in Table VII, it is understood that when zinc sulfide is used, an excellent effect similar to that of the present invention cannot be obtained at all.

As explained above, the composition of this invention is a composition that can provide an acrylic artificial marble having anti-MRSA characteristics, which could not be obtained in conventional techniques by curing and molding.

Also, the manufacturing method of this invention is a method that can be simply and favorably carried out, and the artificial marble of this invention is an acrylic artificial marble having an anti-MRSA characteristic, which could not be obtained in conventional techniques.

## Claims

1. An acrylic artificial marble composition comprising:
(a) a resin component;
(b) alumina tri-hydrate; and
(c) an antibacterial agent containing zinc oxide.

2. The artificial marble composition of Claim 1 wherein:
(a) the resin component is present at 90-10 parts by weight;
(b) the alumina tri-hydrate is present at 10-90 parts by weight;
(c) the antibacterial agent containing zinc oxide is present at 0.1 to 10 parts by weight per 100 parts by weight of the total amount of (a) the resin and (b) the alumina tri-hydrate.

3. The artificial marble composition of Claim 1 or 2 wherein the resin component is a syrup comprising an acrylic group polymer dissolved in a material selected from the group of an acrylic group monomer solution and a mixed monomer solution containing a vinyl monomer for copolymerization with an acrylic group monomer as a main component.

4. The artificial marble composition of Claim 3 wherein a vinyl monomer having two or more vinyl groups in a molecule comprises a crosslinking agent for the resin component.

5. The artificial marble composition of Claim 3 comprising a catalyst for curing the resin component.

6. An anti-methicillin resistant staphylococcus aureus acrylic artificial marble produced by curing the composition of Claim 1 or 2.

7. A method for making an acrylic artificial marble product comprising sanding a surface of a product obtained by curing the composition of Claim 1 or 2.

## Patentansprüche

1. Acrylische Kunstmarmor-Zusammensetzung, umfassend:
(a) eine Harzkomponente;
(b) Aluminiumoxidtrihydrat; und
(c) ein Zinkoxid enthaltendes antibakterielles Mittel.

2. Kunstmarmor-Zusammensetzung nach Anspruch 1, in welcher:
(a) die Harzkomponente zu 90-10 Gewichtsteilen anwesend ist;
(b) das Aluminiumoxidtrihydrat zu 10-90 Gewichtsteilen anwesend ist;
(c) das Zinkoxid enthaltende antibakterielle Mittel zu 0,1 bis 10 Gewichtsteilen pro 100 Gewichtsteile der Gesamtmenge von (a) dem Harz und (b) dem Aluminiumoxidtrihydrat anwesend ist.

3. Kunstmarmor-Zusammensetzung nach Anspruch 1 oder 2, in welcher die Harzkomponente ein Sirup ist, welcher ein Acrylgruppen-Polymer umfaßt, das in einem Material gelöst ist, das aus der Gruppe einer Acrylgruppen-Monomerlösung und einer gemischten Monomerlösung, die ein Vinylmonomer für die Copolymerisation mit einem Acrylgruppen-Monomer als Hauptkomponente enthält, ausgewählt ist.

4. Kunstmarmor-Zusammensetzung nach Anspruch 3, in welcher ein Vinylmonomer mit zwei oder mehr Vinylgruppen in einem Molekül ein Vemetzungsmittel für die Harzkomponente umfaßt.

5. Kunstmarmor-Zusammensetzung nach Anspruch 3, umfassend einen Katalysator für die Härtung der Harzkomponente.

6. Acrylischer Kunstmarmor gegen Methicillin-resistenten Staphylococcus aureus, hergestellt durch Härtung der Zusammensetzung nach Anspruch 1 oder 2.

7. Verfahren zur Herstellung eines acrylischen Kunstmarmor-Produkts, umfassend das Schleifen einer Oberfläche eines Produkts, das durch die Härtung der Zusammensetzung nach Anspruch 1 oder 2 erhalten wurde.

## Revendications

1. Composition de marbre artificiel acrylique, comprenant :
(a) un composant de résine;
(b) du trihydrate d'alumine, et
(c) un agent antibactérien contenant de l'oxyde de zinc.

2. Composition de marbre artificiel selon la revendication 1, dans laquelle :
(a) le composant de résine est présent à raison de 90-10 parties en poids;
(b) le trihydrate d'alumine est présent à raison de 10-90 parties en poids;
(c) l'agent antibactérien contenant l'oxyde de zinc est présent à raison de 0,1 à 10 parties en poids par 100 parties en poids de la quantité totale (a) de résine et (b) de trihydrate d'alumine.

3. Composition de marbre artificiel selon la revendication 1 ou 2, dans laquelle le composant de résine est un sirop comprenant un polymère à groupement acrylique dissous dans un matériau choisi parmi le groupe constitué d'une solution de monomère à groupement acrylique et d'une solution de monomère mélangé contenant un monomère vinylique pour la copolymérisation avec un monomère à groupement acrylique comme composant principal.

4. Composition de marbre artificiel selon la revendication 3, dans laquelle un monomère vinylique comportant deux ou davantage de groupements vinyliques dans une molécule, comprend un agent de réticulation pour le composant de résine.

5. Composition de marbre artificiel selon la revendication 3, comprenant un catalyseur pour durcir le composant de résine.

6. Marbre artificiel acrylique contre Staphylococcus aureus résistant à la méthicilline, produit par durcissement de la composition selon la revendication 1 ou 2.

7. Procédé de fabrication d'un produit de marbre artificiel acrylique, comprenant le ponçage d'une surface d'un produit obtenu par durcissement de la composition selon la revendication 1 ou 2.
